# EUROPEAN PATENT SPECIFICATION

(11) **EP 3 301 551 B1**
(45) Date of publication and mention of the grant of the patent: **10.06.2020**
(21) Application number: 17193942.4
(22) Date of filing: 29.09.2017
(51) Int. Cl.: G06F 3/043, G06F 1/16

(54) **ELECTRONIC DEVICE FOR IDENTIFYING TOUCH**
ELEKTRONISCHE VORRICHTUNG ZUR IDENTIFIZIERUNG VON BERÜHRUNG
DISPOSITIF ÉLECTRONIQUE D'IDENTIFICATION DE CONTACT

(30) Priority: 29.09.2016 WO PCT/CN2016/100808
(43) Date of publication of application: 04.04.2018
(73) Proprietor: Beijing Xiaomi Mobile Software Co., Ltd., Beijing 100085 (CN)
(72) Inventor: XIANG, Ji, BEIJING, 100085 (CN); GAO, Yuan, BEIJING, 100085 (CN); CUI, Hongtu, BEIJING, 100085 (CN)
(74) Representative: Cabinet Beau de Loménie

(56) References cited:
- EP-A1- 2 922 282
- WO-A1-2012/131355
- WO-A1-2014/125294
- US-A1- 2016 154 535

## Description

### TECHNICAL FIELD

The present disclosure relates to the field of electronic technology, and more particularly, to a terminal, a method, an apparatus, and an electronic device for identifying a touch.

### BACKGROUND

In the related art, an anti-mistaken-touch function of a smart phone is generally realized by a proximity sensor. The proximity sensor includes an infrared diode and a photosensitive diode. In a process of a specific anti-mistaken-touch, an infrared light wave is emitted by the infrared diode. And then the infrared light wave may be reflected to the photosensitive diode if propagating to touch face or hair of a user. The light wave may be transformed to an electric signal by the photosensitive diode and then the electric signal is transformed into a digital signal by a photo diode amplifier. Based on the digital signal, it may be identified whether the smart phone is hand-held when calling so as to determine to lock or unlock a display screen of the smart phone. Thus, the anti-mistaken touch is realized. As integrated circuits of both the infrared diode and the photosensitive diode need to be attached to a printed circuit board (PCB for short) of the smart phone. Furthermore, a front glass of the smart phone must be drilled, which may occupy the display screen.

US 2016/154535 A1 shows ultrasonic detection of a object in front of a touchscreen. EP 2 922 282 A1 shows a loudspeaker for normal sound where the sound is lead through some internal components. This document also shows a separate proximity sensor.

### SUMMARY

The invention is defined in the independent claim. The dependent claims define particular embodiments.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1A is a partial perspective view illustrating a terminal according to an exemplary embodiment.
Fig. 1B is a schematic diagram illustrating a location of a first hole on a terminal shown in Fig. 1A according to an exemplary embodiment.
Fig. 2A is a partial perspective view illustrating a terminal according to another exemplary embodiment.
Fig. 2B is a partial perspective view illustrating a terminal shown in Fig. 2A according to an exemplary embodiment.
Fig. 3 is a flow chart showing a method for identifying a touch according to an exemplary embodiment.
Fig. 4 is a flow chart showing a method for identifying a touch according to another exemplary embodiment.
Fig. 5 is a schematic diagram illustrating an apparatus for identifying a touch according to an exemplary embodiment.
Fig. 6 is a schematic diagram illustrating an apparatus for identifying a touch according to another exemplary embodiment.
Fig. 7 is a block diagram of an electronic device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

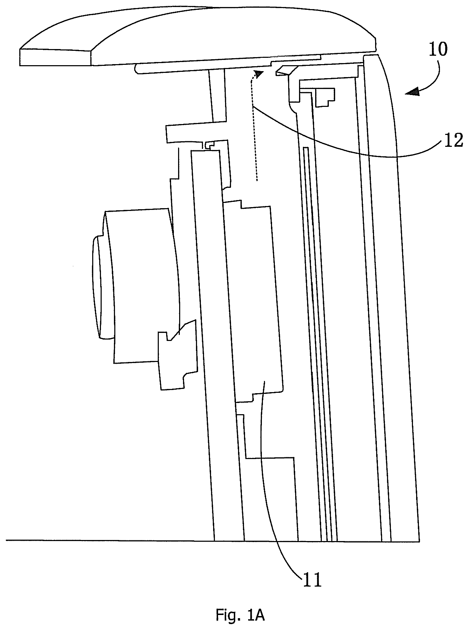

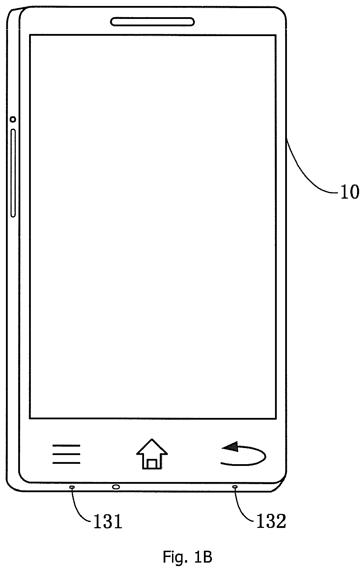

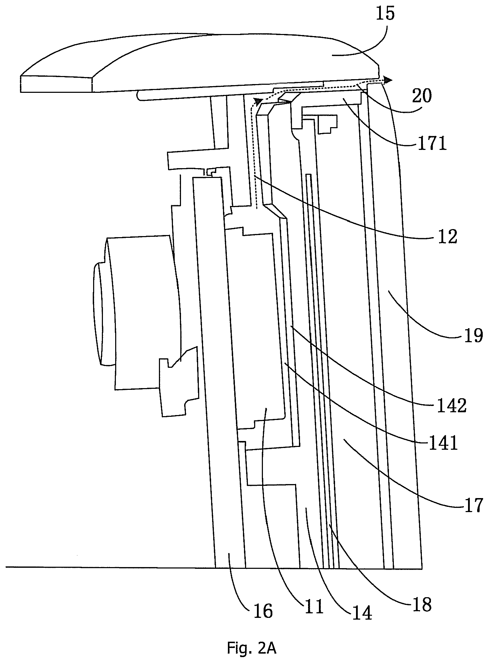

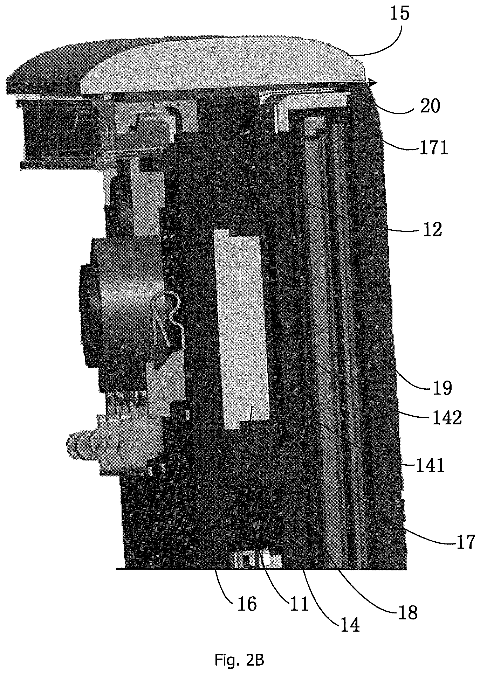

Fig. 1A is a partial perspective view illustrating a terminal according to an exemplary embodiment, and Fig. 1B is a schematic diagram illustrating a location of a first hole on a terminal shown in Fig. 1A according to an exemplary embodiment. The terminal 10 may be an electronic device with a touch-control function. For example, the electronic device may be a smart phone, a tablet and the like. As shown in Fig. 1A and Fig. 1B, the terminal 10 includes: an ultrasonic wave emitter 11, an ultrasonic wave signal path and a microphone (not shown in Fig. 1A, Fig. 2A and Fig. 2B).

An ultrasonic wave signal emitted by the ultrasonic wave emitter 11 propagates from inside of the terminal 10 to surfaces of the terminal 10 via the ultrasonic wave signal path. The microphone 131 and the microphone 132 may receive an ultrasonic echo signal of the ultrasonic wave signal, and then determine whether the terminal 10 is touched according to the ultrasonic echo signal.

In an embodiment, a specific arrangement of the microphone 131 and the microphone 132 may be determined by referring to a design in the related art. A design of locations of the first holes corresponding to the microphone 131 and the microphone 132 is not elaborated in detail herein. The number of the first holes may be determined based on actual requirements for designing the terminal 10, which is not limited to embodiments of the present disclosure.

In an embodiment, the ultrasonic wave signal may have a set frequency. The set frequency may be within a range of frequencies which are able to penetrate the surfaces of the terminal 10, for example, the range is 40 kHz-60 kHz, such that the ultrasonic echo signal resulted from a reflection of the ultrasonic wave signal by a shelter may propagate to the microphone 131 and the microphone 132 of the terminal 10. A signal processing circuit corresponding to the microphone 131 and the microphone 132 may determine whether the terminal 10 is touched according to the ultrasonic echo signal. If the terminal 10 is touched, the signal processing circuit may send an instruction for indicating a mistaken-touch to a processor of the terminal 10, and the processor prevents the terminal 10 from responding, for example, to a touch action.

In an embodiment, the ultrasonic wave signal is emitted by the ultrasonic wave emitter 11. The ultrasonic wave signal may penetrate the surfaces of the terminal 10 directly. The ultrasonic echo signal resulted from the reflection of the ultrasonic wave signal by the shelter may propagate to the microphone 131 and the microphone 132 of the terminal 10, if the surfaces of the terminal 10 are sheltered. The signal processing signal corresponding to the microphone 131 and the microphone 132 determines whether the terminal is touched according to the ultrasonic echo signal and a judgement of the mistaken-touch is achieved. As the ultrasonic wave emitter 11 is arranged inside the terminal 10, it may be avoided that one of the surfaces of the terminal 10 is drilled to form a hole for accommodating the ultrasonic wave emitter 11, and an influence on identifying the touch action because oil stain or dust enters into the hole may be avoided if the oil stain or dust is adhered to a surface of the cover-glass. Furthermore, an aesthetic feeling of the terminal may be ensured in appearance design.

Fig. 2A is a partial perspective view illustrating a terminal according to an exemplary embodiment, and Fig. 2B is a partial perspective view illustrating a terminal shown in Fig. 2A according to an exemplary embodiment. The above terminal provided in embodiments of the present disclosure is used in the embodiment for exemplary illustrating by taking accommodating the ultrasonic wave signal path into the electronic device as an example. As shown in Fig. 2A and Fig. 2B, on the basis of embodiments shown as Fig. 1A and Fig. 1B, the terminal may further include: a pad 14, a side-frame 15, a printed circuit board 16 and a display module 17. The side-frame 14 is disposed at a side of the terminal 10 (shown as an upper side of the terminal). The ultrasonic wave signal path is formed on the pad 14, and the ultrasonic wave signal path extends to the side-frame 15 from the ultrasonic wave emitter 11 along a direction of a dotted arrow 12 shown in Fig. 2A. The ultrasonic wave signal may be inducted along a predetermined direction by the ultrasonic wave signal path such that it may be ensured that the ultrasonic wave signal may propagate to the surfaces of the terminal 10.

In an embodiment, a second hole is formed as the ultrasonic wave signal path on the pad 14. A first side of the pad 14 is closely contacted with the printed circuit board 16, and a second side of the pad 14 is closely contacted with the display module 17. In an embodiment, foam 18 may be filled between the pad 16 and the display module 17. Press over the pad 14 by the display module 17 may be relieved due to the foam 18.

In an embodiment, an accommodation space 141 is disposed inside of the pad 14 and at a position where the ultrasonic wave emitter 11 is located. The accommodation space 141 is for accommodating the ultrasonic wave emitter 11. A shape of the accommodation space 141 corresponds with a space of the ultrasonic wave emitter 11. Space may be maintained between a lower end 142 of the accommodation space 141 and the ultrasonic wave emitter 11, which may avoid the press over the ultrasonic wave emitter 11 because the ultrasonic wave emitter 11 and the accommodation space 141 are too much closely to each other.

In an embodiment, shown as a dotted arrow 20 in Fig.2B, a first seam is formed between the side-frame 15 and a holder of the display module 17, a second seam is formed between the side-frame 15 and an end of a cover-glass 19 of the terminal 10, and the ultrasonic wave signal path is connected with the first seam and the second seam. The ultrasonic wave signal may propagate to the surface of the cover-glass 19 along directions of the dotted arrow 12 and the dotted arrow 20, when the ultrasonic wave signal is emitted by the ultrasonic wave emitter 11.

In an embodiment, a width of each of the first seam and the second seam ranges from 0.01 mm to 0.04 mm, for example, 0.02mm. By keeping a smaller seam between the side-frame 15 and the cover-glass 19, it may be ensured that the ultrasonic wave signal may be emitted to the surfaces of the terminal 10 without influencing on an appearance of the terminal 10.

In an exemplary scene, for example, a user makes a call through the terminal 10, during a process of calling, the processor of the terminal 10 may detect that the user is making the call and the terminal 10 is hand-held (an earphone is not inserted into the terminal 10), and the processor (not shown) fixed on the printed circuit board 16 may control the ultrasonic wave emitter 11 to emit the ultrasonic wave signal with the sett frequency. The ultrasonic wave signal is refracted by the ultrasonic wave signal path to the seam between the side-frame 15 and the cover-glass 19, and then the ultrasonic wave signal is emitted outside of the terminal 10. As face approaches to the cover-glass 19, the ultrasonic wave signal may be reflected by the face such that the ultrasonic echo signal resulted from the reflection of the ultrasonic wave signal propagates to the microphone 131 and the microphone 132 of the terminal 10. The signal processing circuit corresponding to the microphone 131 and the microphone 132 may determine whether the ultrasonic echo signal is caused by a reflection of the ultrasonic wave signal due to the face or by space radiation of the ultrasonic wave signal, after the microphone 131 and the microphone 132 receive the ultrasonic echo signal. Generally, an amplitude of the ultrasonic echo signal due to the face is significant greater than the amplitude of the ultrasonic echo signal due to the space radiation. An approach of the face to the cover-glass 19 may be detected, such that the processor may open an anti-mistaken-touch function, thereby preventing the terminal from responding to the touch action because of the approach of the face to the cover-glass 19.

It is to be understood by those skilled in the art, if the terminal 10 is placed into a pocket or bag of the user, the touch action may be detected according to embodiments of the present disclosure, and a response to the touch action in this scene may be avoid.

In an embodiment, the ultrasonic wave signal is controlled to propagate to the seam between the cover-glass 19 and the side-frame 15 via the ultrasonic wave signal path inside of the terminal 10, and then propagate outside of the cover-glass 19 through the seam. If the face or hair approaches, the ultrasonic echo signal resulted from the reflection of the ultrasonic wave signal propagates to the microphone of the terminal 10, and then it is identified whether the ultrasonic echo wave is caused by the approach of the face or the hair to the cover-glass19, thereby achieving the anti-mistaken-touch function.

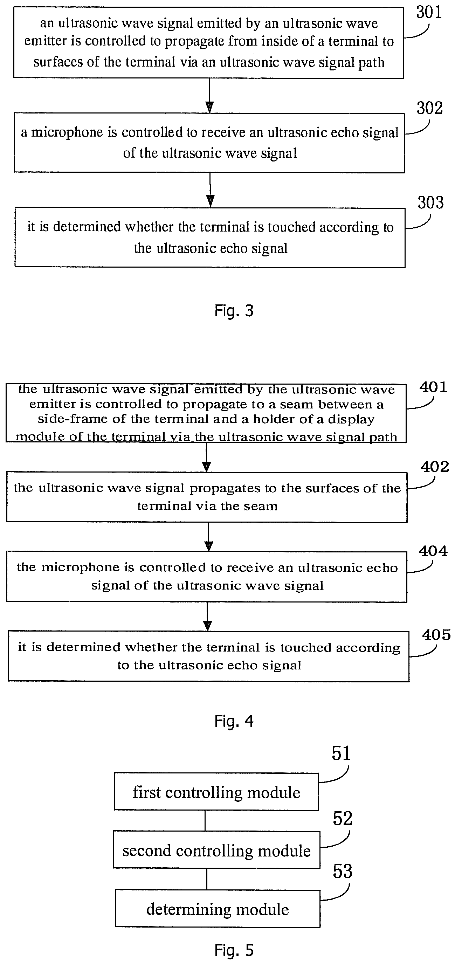

Fig. 3 is a flow chart showing a method for identifying a touch according to an exemplary embodiment. As shown in Fig. 3, the method includes followings.

At block 301, an ultrasonic wave signal emitted by an ultrasonic wave emitter is controlled to propagate from inside of a terminal to surfaces of the terminal via an ultrasonic wave signal path.

At block 302, a microphone is controlled to receive an ultrasonic echo signal of the ultrasonic wave signal.

At block 303, it is determined whether the terminal is touched according to the ultrasonic echo signal.

Fig. 4 is a flow chart showing a method for identifying a touch according to another exemplary embodiment. As shown in Fig. 4, the method includes followings.

At block 401, the ultrasonic wave signal emitted by the ultrasonic wave emitter is controlled to propagate to a seam between a side-frame of the terminal and a holder of a display module of the terminal via the ultrasonic wave signal path.

At block 402, the ultrasonic wave signal propagates to the surfaces of the terminal via the seam.

In block 404, the microphone is controlled to receive an ultrasonic echo signal of the ultrasonic wave signal.

In block 405, it is determined whether the terminal is touched according to the ultrasonic echo signal.

The block 405 may further includes:
determining an amplitude of the ultrasonic echo signal;
determining an energy value of the ultrasonic echo signal according to the amplitude; and
determining whether the terminal is touched according to the energy value.

Determining whether the terminal is touched according to the energy value may includes:
comparing the energy value with a predetermined threshold;
determining that the terminal is touched if the energy value is greater than or equal to the predetermined threshold; and
determining that the terminal is touched by mistake if the energy value is smaller than the predetermined threshold.

Regarding to the method and process in embodiments of the present disclosure, a specific manner of executing blocks has been described in detail in embodiments related to the device, which is not elaborated herein.

Fig. 5 is a schematic diagram illustrating an apparatus for identifying a touch according to an exemplary embodiment. As shown in Fig. 5, the apparatus includes a first controlling module 51, a second controlling module 52 and a determining module 53.

The first controlling module 51 is configured to control an ultrasonic wave signal emitted by an ultrasonic wave emitter to propagate from inside of a terminal to surfaces of the terminal via an ultrasonic wave signal path.

The second controlling module 52 is configured to control a microphone to receive an ultrasonic echo signal of the ultrasonic wave signal.

The determining module 53 is configured to determine whether the terminal is touched according to the ultrasonic echo signal.

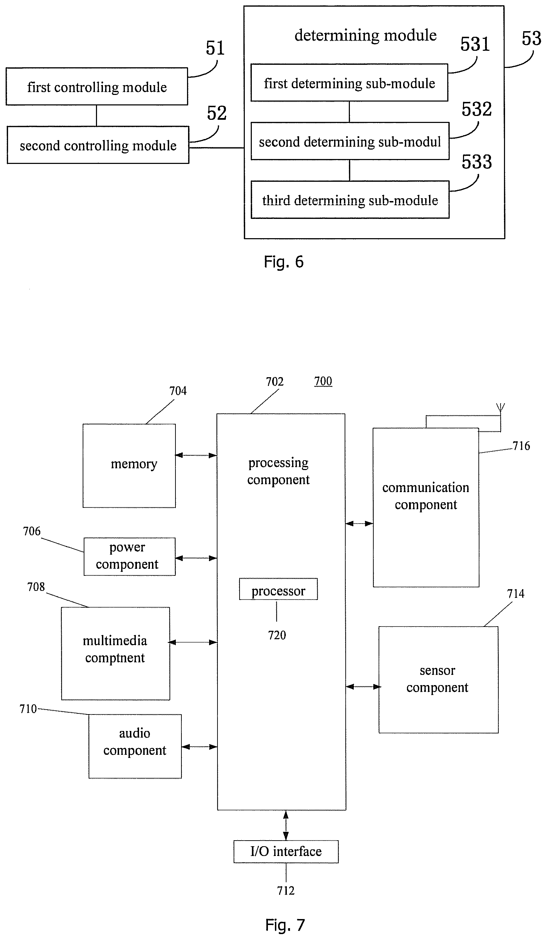

Fig. 6 is a schematic diagram illustrating an apparatus for identifying a touch according to another exemplary embodiment. As shown in Fig.6, on the basis of embodiments shown in Fig. 5, the determining module 53 may include: a first determining sub-module 531, a second determining sub-module 532 and a third determining sub-module 533.

The first determining sub-module 531 is configured to determine an amplitude of the ultrasonic echo signal.

The second determining sub-module 532 is configured to determine an energy value of the ultrasonic echo signal according to the amplitude determined by the first determining sub-module 531.

The third determining sub-module 533 is configured to determine whether the terminal is touched according to the energy value determined by the second determining sub-module 532.

In an embodiment, the third determining sub-module 533 is configured to:
compare the energy value with a predetermined threshold;
determine that the terminal is touched if the energy value is greater than or equal to the predetermined threshold; and
determine that the terminal is touched by mistake if the energy value is smaller than the predetermined threshold.

Regarding to the device in embodiments of the present disclosure, a specific manner of operating by each module has been described in detail in embodiments related to the method, which is not elaborated herein.

Fig. 7 is a block diagram of a device for suitable for touch recognition according to an exemplary embodiment. For example, the device 700 may be a mobile phone, a computer, a digital broadcasting terminal, a messaging device, a game console, a tablet device, a medical device, fitness equipment, a Personal Digital Assistant PDA, and the like.

Referring to Fig. 7, the device 700 may include the following one or more components: a processing component 702, a memory 704, a power component 706, a multimedia component 708, an audio component 710, an Input/Output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 708 includes a front camera and/or a rear camera. The front camera and/or the rear camera may receive external multimedia data while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface for the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700 and relative positioning of components (e.g. the display and the keypad of the device 700). The sensor component 714 may also detect a change in position of the device 700 or of a component in the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as WIFI, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for identifying a touch. The method includes:
controlling an ultrasonic wave signal emitted by an ultrasonic wave emitter to propagate from inside of a terminal to surfaces of the terminal via an ultrasonic wave signal path;
controlling a microphone to receive an ultrasonic echo signal of the ultrasonic wave signal; and
determining whether the terminal is touched according to the ultrasonic echo signal.

In exemplary embodiments, there is also provided a non-transitory computer readable storage medium including instructions, such as the memory 704 including instructions. For example, the non-transitory computer-readable storage medium may be a ROM, a RAM, a CD-ROM, a magnetic tape, a floppy disc, an optical data storage device, and the like. The above instructions are executable by the processor 720 in the device 700, for performing the method for identifying a touch. The method includes:
controlling an ultrasonic wave signal emitted by an ultrasonic wave emitter to propagate from inside of a terminal to surfaces of the terminal via an ultrasonic wave signal path;
controlling a microphone to receive an ultrasonic echo signal of the ultrasonic wave signal; and
determining whether the terminal is touched according to the ultrasonic echo signal.

Other embodiments of the disclosure will be apparent to those skilled in the art from consideration of the specification and practice of the disclosure disclosed here.

## Claims

1. A terminal (10), comprising an ultrasonic wave emitter (11), an ultrasonic wave signal path and a microphone (131, 132), wherein the ultrasonic wave emitter (11) is arranged inside the terminal (10), a first hole is arranged on a side-frame (15) of the terminal (10) for accommodating the microphone (131, 132),
an ultrasonic wave signal emitted by the ultrasonic wave emitter (11) propagates from inside of the terminal (10) to surfaces of the terminal (10) via the ultrasonic wave signal path, the microphone (131, 132) is configured to receive an ultrasonic echo signal of the ultrasonic wave signal, and to determine whether the terminal (10) is touched according to the ultrasonic echo signal, wherein
said terminal further comprises: a pad (14), the side-frame (15), a printed circuit board (16) and a display module (17), wherein the side-frame (15) is disposed at a side of the terminal (10), a second hole is formed as the ultrasonic wave signal path on the pad (14) and inside the terminal, and the ultrasonic wave signal path extends to the side-frame (15) from the ultrasonic wave emitter (11); wherein:
a first side of the pad (14) is closely contacted with the printed circuit board (16), and a second side of the pad (14) is closely contacted with the display module (17); and wherein:
a first seam is formed between the side-frame (15) and a holder (171) of the display module (17), a second seam is formed between the side-frame (15) and an end of a cover-glass (19) of the terminal (10), and the ultrasonic wave signal path is connected with the first seam and the second seam.

2. The terminal according to claim 1, wherein an accommodation space (141) is disposed inside of the pad (14) and at a position where the ultrasonic wave emitter (11) is located, the accommodation space (141) is configured to accommodate the ultrasonic wave emitter (11), and a shape of the accommodation space (141) corresponds with a shape of the ultrasonic wave emitter (11).

3. The terminal according to claim 1, wherein a width of each of the first seam and the second seam ranges from 0.01 mm to 0.04 mm.

## Patentansprüche

1. Terminal (10), umfassend einen Ultraschallwellensender (11), einen Ultraschallwellen-Signalpfad und ein Mikrofon (131, 132), wobei der Ultraschallwellensender (11) im Innern des Terminals (10) angeordnet ist, eine erste Öffnung an einem Seitenrahmen (15) des Terminals (10) zur Aufnahme des Mikrofons (131, 132) angeordnet ist,
ein von dem Ultraschallwellensender (11) gesendetes Ultraschallwellensignal sich vom Innern des Terminals (10) über den Ultraschallwellen-Signalpfad zu Oberflächen des Terminals (10) hin ausbreitet, das Mikrofon (131, 132) dazu konfiguriert ist, ein Ultraschallechosignal des Ultraschallwellensignals zu empfangen und zu bestimmen, ob das Terminal (10) gemäß dem Ultraschallechosignal berührt wird, ausgebildet ist, wobei
das Terminal ferner ein Pad (14), den Seitenrahmen (15), eine Leiterplatte (16) und ein Anzeigemodul (17) umfasst, wobei der Seitenrahmen (15) an einer Seite des Terminals (10) angeordnet ist, eine zweite Öffnung als Ultraschallwellen-Signalpfad auf dem Pad (14) und im Innern des Terminals gebildet ist und der Ultraschallwellen-Signalpfad sich von dem Ultraschallwellensender (11) zu dem Seitenrahmen (15) erstreckt, wobei:
eine erste Seite des Pads (14) in engem Kontakt mit der Leiterplatte (16) steht und eine zweite Seite des Pads (14) in engem Kontakt mit dem Anzeigemodul (17) steht, und wobei:
eine erste Fuge zwischen dem Seitenrahmen (15) und einem Halter (171) des Anzeigemoduls (17) gebildet ist, eine zweite Fuge zwischen dem Seitenrahmen (15) und einem Ende eines Deckglases (19) des Terminals (10) gebildet ist und der Ultraschallwellen-Signalpfad mit der ersten und der zweiten Fuge verbunden ist.

2. Terminal nach Anspruch 1, wobei im Innern des Pads (14) und an einer Position, in der sich der Ultraschallwellensender (11) befindet, ein Aufnahmeraum (141) angeordnet ist, der Aufnahmeraum (141) dazu konfiguriert ist, den Ultraschallwellensender (11) aufzunehmen, und eine Form des Aufnahmeraums (141) einer Form des Ultraschallwellensenders (11) entspricht.

3. Terminal nach Anspruch 1, wobei eine Breite der ersten Fuge und der zweiten Fuge jeweils 0,01 mm bis 0,04 mm beträgt.

## Revendications

1. Terminal (10), comprenant un émetteur d'onde ultrasonore (11), un trajet de signal d'onde ultrasonore et un microphone (131, 132), dans lequel l'émetteur d'onde ultrasonore (11) est agencé à l'intérieur du terminal (10), un premier trou est agencé sur un châssis latéral (15) du terminal (10) pour recevoir le microphone (131, 132),
un signal d'onde ultrasonore émis par l'émetteur d'onde ultrasonore (11) se propage de l'intérieur du terminal (10) vers les surfaces du terminal (10) par l'intermédiaire du trajet de signal d'onde ultrasonore, le microphone (131, 132) est configuré pour recevoir un signal d'écho ultrasonore du signal d'onde ultrasonore, et pour déterminer si le terminal (10) est touché conformément au signal d'écho ultrasonore, dans lequel
ledit terminal comprend en outre : une pastille (14), le châssis latéral (15), une carte de circuit imprimé (16) et un module d'affichage (17), dans lequel le châssis latéral (15) est disposé sur un côté du terminal (10), un deuxième trou est formé en tant que trajet de signal d'onde ultrasonore sur la pastille (14) et à l'intérieur du terminal, et le trajet de signal d'onde ultrasonore s'étend vers le châssis latéral (15) à partir de l'émetteur d'onde ultrasonore (11) ; dans lequel :
un premier côté de la pastille (14) est étroitement en contact avec la carte de circuit imprimé (16), et un deuxième côté de la pastille (14) est étroitement en contact avec le module d'affichage (17) ; et dans lequel :
un premier raccord est formé entre le châssis latéral (15) et un support (171) du module d'affichage (17), un deuxième raccord est formé entre le châssis latéral (15) et une extrémité d'un verre de recouvrement (19) du terminal (10), et le trajet de signal d'onde ultrasonore est relié au premier raccord et au deuxième raccord.

2. Terminal selon la revendication 1, dans lequel un espace de logement (141) est disposé à l'intérieur de la pastille (14) et à une position où l'émetteur d'onde ultrasonore (11) est situé, l'espace de logement (141) est configuré pour recevoir l'émetteur d'onde ultrasonore (11), et une forme de l'espace de logement (141) correspond à une forme de l'émetteur d'onde ultrasonore (11).

3. Terminal selon la revendication 1, dans lequel une largeur de chacun du premier raccord et du deuxième raccord va de 0,01 mm à 0,04 mm.
